# EUROPÄISCHE PATENTANMELDUNG

(11) **EP 0 788 261 A1**
(43) Veröffentlichungstag der Anmeldung: **06.08.1997**
(21) Anmeldenummer: 97104210.6
(22) Anmeldetag: 29.05.1991
(51) Int. Cl.: H04L 25/03, H04L 1/20, H04L 1/24, H04L 5/14

(54) **Empfangsqualitätsbestimmung eines Entzerrer/Empfängers eines Basisband-Zweidrahtmodems**

(30) Priorität: 01.06.1990 AT 1200/90
(62) Teilanmeldung aus: 91890117.4
(71) Anmelder: ERICSSON AUSTRIA AKTIENGESELLSCHAFT, 1121 Wien (AT)
(72) Erfinder: Pfeiffer, Johann Dipl.Ing., A-3804 Allensteig (AT)
(74) Vertreter: Gibler, Ferdinand, Dipl.Ing. Dr. techn.

(57) **Zusammenfassung**

Zweidrahtmodem zur Übertragung von Signalen im Basisband mit einem Sende- und einem Empfangsteil (2, 9), welche ausgangs- bzw. eingangsseitig über eine Gabelschaltung (8) mit einer Zweidrahtleitung verbunden sind, wobei der Sendeteil (2) und der Empfangsteil (9) zur Korrektur des empfangenen Signals mit einem Echoauslöscher (14) verbunden sind und das korrigierte Signal (KE) einem Vorwärtsentzerrer (17) zugeführt wird, welcher Vorwärtsentzerrer über einen ersten Eingang (+) und den Ausgang einer Subtrahierschaltung (19) mit dem Eingang eines Discriminators (25) zur Umwandlung des kodierten Empfangssignals in ein binäres Empfangssignal verbunden ist, wobei ein Ausgang des Discriminators (25) über einen Rückwärtsentzerrer (18) an einen zweiten Eingang (-) der Subtrahierschaltung (19) rückgeführt ist, und wobei ein weiterer Ausgang des Discriminators (25) über ein adaptives Filter (Noise Predictor) (20) an einen weiteren Eingang (-) der Subtrahierschaltung (19) rückgeführt ist.

## Beschreibung

Die Erfindung betrifft ein Zweidrahtmodem zur Übertragung von Signalen im Basisband mit einem Sende- und einem Empfangsteil, welche ausgangs- bzw. eingangsseitig über eine Gabelschaltung mit einer Zweidrahtleitung verbunden sind, wobei der Sendeteil und der Empfangsteil zur Korrektur des empfangenen Signals mit einem Echoauslöscher verbunden sind und das korrigierte Signal einem Vorwärtsentzerrer zugeführt wird, welcher Vorwärtsentzerrer über einen ersten Eingang und den Ausgang einer Subtrahierschaltung mit dem Eingang eines Discriminators zur Umwandlung des kodierten Empfangssignals in ein binäres Empfangssignal verbunden ist, wobei ein Ausgang des Discriminators über einen Rückwärtsentzerrer an einen zweiten Eingang der Subtrahierschaltung rückgeführt ist.

Aufgabe der Erfindung ist es, die Qualtität des Empfangssignals zu verbessern und aufeinanderfolgende Fehler bei der Übertragung zu dekorrelieren.

Erfindungsgemäß wird dies dadurch erreicht, daß ein weiterer Ausgang des Discriminators über ein adaptives Filter (Noise Predictor) an einen weiteren Eingang der Subtrahierschaltung rückgeführt ist.

Liegt ein Momentanwert des Empfangssignals nach der Umwandlung durch den Discriminator in einem definierten, verbotenen Bereich, so wird über das adaptive Filter (Noise Predictor) das Empfangssignal so beinflußt, daß möglichst wenige derartige verbotene Zustände auftreten.

Weitere Aufgabe der Erfindung ist es, ein Verfahren zur Übertragung von Signalen im Basisband anzugeben, mit dem eine Verbesserung der Qualität des Empfangssignals erreichbar ist.

Bei einem Verfahren zur Übertragung von Signalen im Basisband, bei dem in einem mit dem Sende- und dem Empfangsteil des Modems verbundenen Echoauslöscher durch Auswertung des eigenen Sendesignals und durch Auswertung des eigenen korrigierten Empfangssignals ein Korrektursignal erzeugt und vom eigenen Empfangssignal des Empfangsteils subtrahiert wird, darauffolgend das korrigierte Empfangssignal über einen Vorwärtsentzerrer geführt und entzerrt wird, weiters das Ausgangssignal des Vorwärtsentzerrers über eine Subtrahierschaltung an den Eingang eines Discriminators geführt wird, durch welchen eine Umwandlung des korrigierten Empfangssignals in ein binäres Signal vorgenommen wird, wobei in der Subtrahierschaltung das Ausgangssignal eines Rückwärtsentzerrers, welcher sein Eingangssignal vom Discriminator erhält, vom korrigierten Empfangssignal subtrahiert wird, wird dies dadurch erreicht, daß im Discriminator eine Bewertung der Empfangsqualität des korrigierten Empfangssignals vorgenommen und ein entsprechendes Fehlersignal gebildet wird, welches dem Eingang eines adaptiven Filters (Noise Predictors) zugeführt wird, und daß das Ausgangssignal des adaptiven Filters (Noise Predictors) zusätzlich vom korrigierten Empfangssignal subtrahiert und damit die eigentliche Eingangsgröße für den Discriminator gebildet wird.

Dadurch wird das Empfangssignal so beeinflußt, daß möglichst selten Zustände im verbotenen Bereich auftreten. Es werden dadurch aufeinanderfolgende Fehler dekorelliert.

In weiterer Ausbildung der Erfindung kann vorgesehen sein, daß im Discriminator ein Signal-Qualitätssignal erzeugt wird, wobei das korrigierte und entzerrte Empfangssignal mit voreingestellten Signalqualitätspegeln, welche jeweils zwischen den Nennpegeln des Signals liegen, verglichen und dadurch ein Signal (SQ) erzeugt wird, welches angibt, ob das Empfangssignal eine bestimmte Mindestqualität aufweist.

Gemäß einer weiteren Ausführungsform der Erfindung kann vorgesehen sein, daß im Empfangsteil in einer Auswertelogik der Signalpegel des decodierten Empfangssignals und des eigenen Sendesignals unter Erzeugung eines Ausgangssignals verknüpft werden, welches Ausgangssignal angibt, ob der Datenübertragungskanal zwischen sendender und empfangender Datenstation bereit oder unterbrochen ist.

Gemäß einer anderen Variante der Erfindung kann vorgesehen sein, daß zusätzlich zu den Daten des Hauptkanals, Daten eines Hilfskanals mit reduzierter Datenrate übertragen werden, indem zusätzlich zu bestimmten, für den Hauptkanal festgelegten Signalpegeln, weitere Signalpegel vereinbart und - abhängig von den Daten des Hilfskanals - an Stelle der Pegel des Hauptkanals gesendet werden.

Nachstehend ist die Erfindung anhand eines in den Zeichnungen dargestellten Zweidrahtmodems beispielsweise erläutert. Es zeigt:
Fig. 1 das Blockschaltbild einer Ausführungsform eines erfindungsgemäß arbeitenden Zweidrahtmodems,
Fig. 2 das Blockschaltbild einer möglichen Ausführungstorm eines Codierers des Zweidrahtmodems nach Fig. 1,
Fig. 3 die Codiertabelle des Codierers gemäß Fig. 2, und
Fig. 4 das Signalbewertungsschema des Noise-Predictors des Empfangsteils des Zweidrahtmodems nach Fig. 1.

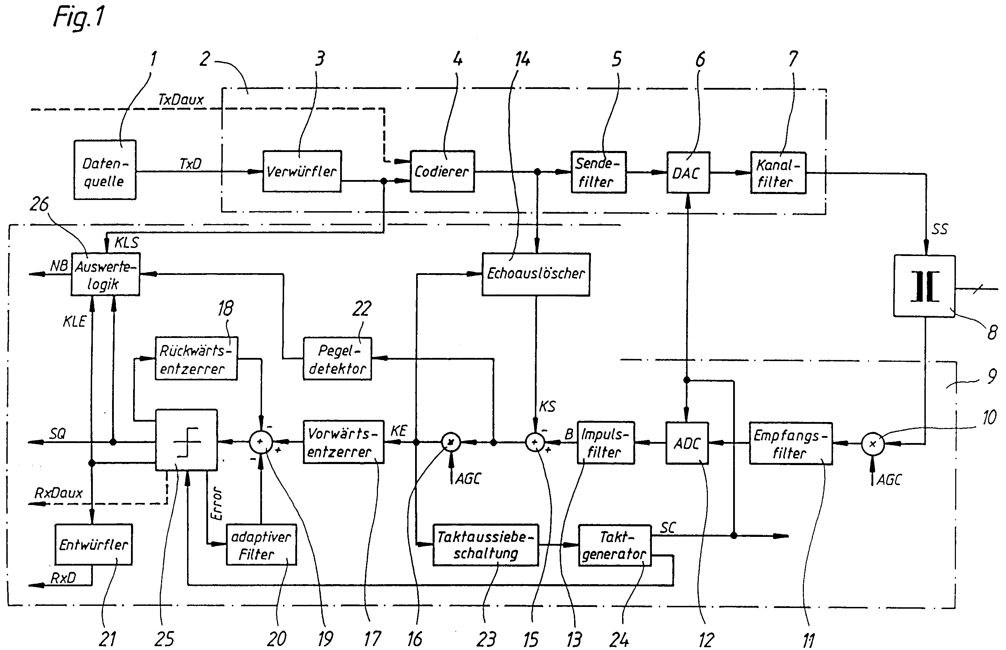

Bei dem in Figur 1 gezeigten Zweidrahtmodem liegen die von einer Datenquelle 1 ausgesendeten binären, aber sonst beliebigen Daten am Eingang TxD des Sendeteils 2 des Modems an. Der Sendeteil 2 bildet daraus ein am senderseitigen Eingang einer Gabelschaltung 8 anliegendes analoges Sendesignal SS, das an den Leitungsausgang der Gabelschaltung gekoppelt und über eine Zweidrahtleitung zur zweiten empfangenden Datenstation übertragen wird. Ein auf der Zweidrahtleitung ankommendes Signal wird über die Gabelschaltung 8 als Empfangssignal SE an den Eingang eines Empfangsteiles 9 des Modems geführt. Am Ausgang des Empfangsteils ist ein Signal RxD abgreifbar, welches die über die Leitung empfangenen digitalen Daten der sendenden Datenstation repräsentiert. Außerdem wird ein Signal SQ erzeugt, welches von der Qualität des empfangenen Signals abhängt und ein Signal NB, welches angibt, ob der Übertragungskanal als unterbrochen zu bewerten ist.
Im folgenden soll die Funktion des Sendeteils genauer beschrieben werden. Die von der Datenquelle gelieferten binären Daten unterliegen in ihrem Werteverlauf keinen Einschränkungen. Der unmittelbar dem Eingang des Sendeteils nachgeschaltete Verwürfler 3 vertauscht die Datenfolge nach einem bestimmten vorgewählten Algorithmus so, daß bestimmte Eigenschaften in der Aufeinanderfolge der logischen Zustände erreicht werden. So können z.B. länger dauernde Folgen von gleichartigen Zuständen durch Fülldaten aufgespaltet werden. Am Ausgang des Verwürflers tritt ein digitales Signal auf, das im Codierer 4 in eine für die Übertragung über eine Zweidrahtleitung möglichst günstige Signalart umgewandelt wird.

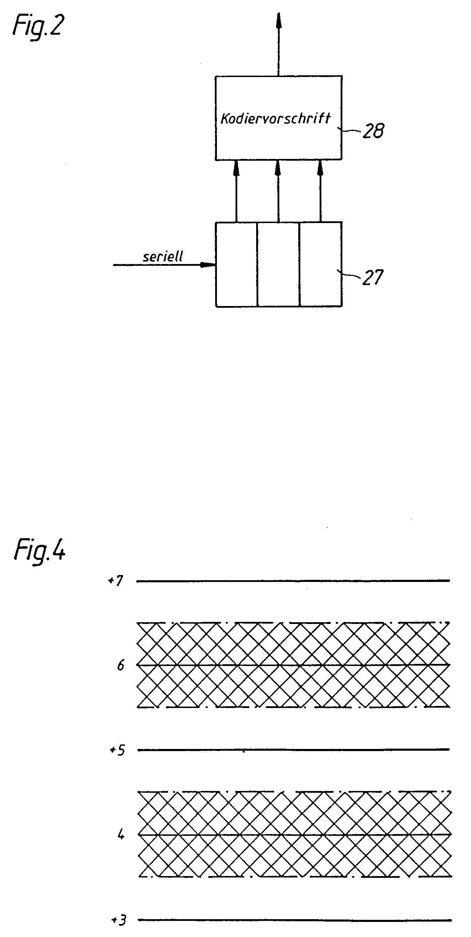

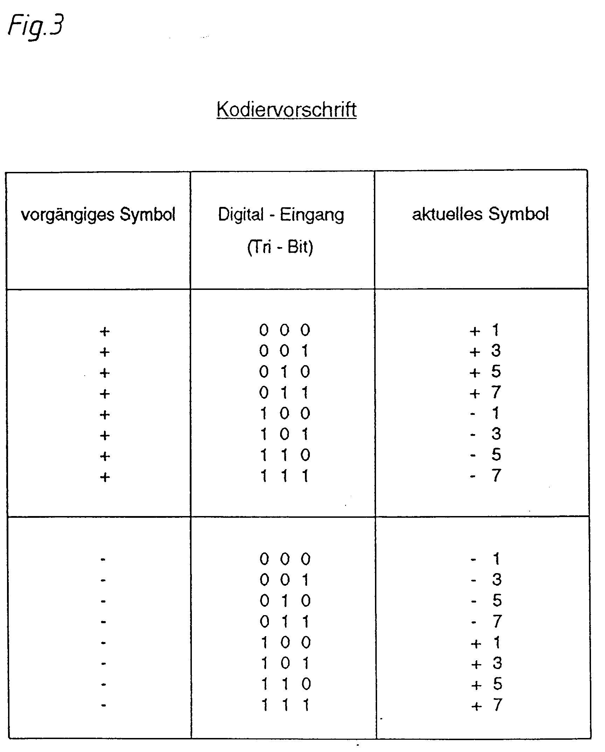

Figur 2 erläutert die Funktion des Codierers 4. Am Eingang des Codierers liegt eine serielle Folge von Binärzeichen an, welche vom Verwürfler geliefert werden. Jeweils drei solcher zweiwertiger Zeichen werden z.B. in einem Schieberegister 27 zusammengefaßt und ergeben als sogenanntes Tri-Bit das Eingangssignal für den Codeumwandler 28. Der Codeumwandler erzeugt entsprechend seiner Codiertabelle, wie z.B. in Figur 3 beschrieben, abhängig vom vorhergehenden Ausgangssignal ein dem am Eingang anliegenden Tri-Bit entsprechendes Ausgangssymbol, von denen insgesamt acht unterscheidbare Symbole vorgesehen sind. Sie entsprechen den positiven Leitungspegeln +1, +3, +5, +7 und den negativen Leitungspegeln - 1, -3, -5 und -7. Dieser Code, ein oktogonaler Dreiercode wird insbesondere für die Basisband-Übertragung von Signalen über Zweidrahtleitungen verwendet, weil durch die Art der Codierung es gleichgültig ist, ob die zwei Signalleiter der Zweidrahtleitung beim Aufbau der Verbindung fälschlich miteinander vertauscht wurden. Durch die zusammenfassende Repräsentierung von jeweils drei Bits des Eingangssignales durch ein Ausgangssymbol kommt es zu einer Drittelung der Schrittgeschwindigkeit des über die Leitung übertragenen Signals, bezogen auf die Datenrate der binären Zeichen. Damit wird auch die Bandbreite des Frequenzbandes, in dem das Signal auf der Leitung liegt, um den Faktor 3 reduziert, was sowohl die Kopplung zu Nachbarkanälen auf der Leitung (= das Übersprechen) reduziert als auch die Dämpfung auf der Leitung wegen der niedrigeren Frequenzen verringert. Im Falle, daß zusätzlich zu den Sendedaten weitere Daten eines Hilfskanals mit reduzierter Datenrate übertragen werden sollen (Dateneingang TxDaux), ist die Funktion des Codierers, z.B. wie im folgenden beschrieben, ausgeführt:

Die Daten des Hauptkanals werden in gleicher Weise codiert wie ohne zusätzlichen Hilfskanal; steht jedoch ein Datenbit des Hilfskanals zur Sendung an, so wird, sobald im Hauptkanal der Sendepegel +7 bzw. -7 auftritt, der zusätzlich eingeführte Pegel +9 bzw. -9 gesendet.

Da im zeitlichen Mittel jedes vierte Tribit des Hauptkanals den Pegel +7 bzw. -7 annimmt, ist im Hilfskanal 1/12 der Datenrate des Hauptkanals gegeben. Dies ist ohne eigenen Multiplexer für beide Kanäle und ohne Erhöhung der Sendesymbolrate nur durch geringfügige Erhöhung der Sendeenergie zur Erzeugung der Pegel +9 bzw. -9 erreichbar.

Das angegebene Verfahren für einen Hilfskanal ist auch zu empfangenden Datenstationen ohne Hilfskanaleinrichtung kompatibel.

Das am Ausgang des Codierers 4 anliegende acht- bzw. zehn-wertige Signal wird in einem Sendefilter 5 in seiner Bandbreite begrenzt, wobei die Bandbreite des Filters 5 so gewählt wird, daß die Intersymbolverzerrungen möglichst gering werden, d.h. daß die bei einer Bandbegrenzung eines rechteckförmigen Signals unvermeidlich auftretenden Ausschwingvorgänge solche Nulldurchgänge aufweisen, daß die nachfolgenden Sendesymbole möglichst wenig gestört werden. Die Realisierung dieses Sendefilters 5 erfolgt beispielsweise durch digitale Filterung in einem Signalprozessor. Das digitale Ausgangssignal des Sendefilters wird über einen Digital-Analog-Wandler 6, der von einem Abtasttakt SC gesteuert wird, in ein analoges Signal umgewandelt, welches über ein Kanalfilter 7 geführt wird und an dem Eingang einer Gabelschaltung 8 anliegt.

Die Frequenz des Abtasttaktes SC ist dabei so gewählt, daß das Abtasttheorem erfüllt ist, d.h. daß während des Zeitintervalls, in dem ein Sendesymbol erzeugt wird, mindestens zweimal ein entsprechender Analogwert gebildet wird.

Das Kanalfilter 7 dient dazu, die Sprünge zwischen den aufeinanderfolgenden, vom Digital-Analog-Wandler erzeugten Analogwerten abzurunden, was einer Begrenzung der Bandbreite des analogen Sendersignals entspricht. Dies ist notwendig, weil die sonst vorhandenen Oberwellen des Signals zu Störungen bei der Übertragung auf einer Zweidrahtleitung führen könnten.

Am Ausgang des Kanalfilters 7 liegt somit ein Signal SS an, welches über die Gabelschaltung 8 an die Zweidrahtleitung angekoppelt wird. Die Gabelschaltung wirkt dabei als Zweidraht-Vierdraht-Konverter.

Im folgenden soll die Funktion des Empfangsteils näher erläutert werden. Das Empfangssignal SE wird über die Gabelschaltung 8 von der Zweidrahtleitung ausgekoppelt und liegt am Eingang eines Empfangsverstärkers 10 an, welcher über eine automatische Verstärkungsregelung (AGC) verfügt und an seinem Ausgang unabhängig von den momentanen Signalverhältnissen auf der Leitung ein annähernd amplitudenkonstantes Signal erzeugt, welches am Eingang eines Empfangsfilters 11 anliegt. Das Empfangsfilter 11 stellt im wesentlichen einen Tiefpaß dar, dessen Grenzfrequenz je nach der gewünschten Übertragungsgeschwindigkeit gewählt wird. So ist z.B. bei 64 Kilobit pro Sekunde eine Bandbreite von 15 kHz bei 128 Kilobit pro Sekunden eine von 30 kHz vorteilhaft.

Das Ausgangssignal des Filters liegt am Analogeingang eines Analog-Digital-Wandlers 12 an, der gesteuert vom Abtasttakt SC eines Taktgenerators 24 am Ausgang eine digitale Zählerfolge (z.B. 12-Bit-Werte) als Abbild seiner Eingangsspannung liefert. Im nachfolgenden soll daher unter dem Begriff 'Signal' der durch die Folge der Digitalwerte dargestellte Verlauf einer Größe verstanden werden. Durch die automatische Verstärkungsregelung des Empfangsverstärkers 10 wird der Aussteuerbereich des Analog/Digital-Wandlers 12 voll ausnützbar und daher das Empfangssignal mit der vom Analog/Digital-Wandler festgelegten maximal möglichen Auflösung digitalisierbar. Ein dem Analog-Digital-Wandler 12 nachgeschaltetes Impulsfilter 13 erzeugt ein möglichst rechteckförmiges, dem Sendesignal der sendenden Datenstation soweit wie möglich angenähertes Ausgangssignal. Das am Ausgang des Impulsfilters anliegende Signal B setzt sich daher im wesentlichen aus dem empfangenen Nutzsignal und aus Störanteilen zusammen, welche sich insbesonders aus einem Teil des eigenen Sendesignals, welches über die Gabelschaltung in den Empfangsteil eingekoppelt wird und aus Echosignalen, welche durch Reflexion des eigenen Sendersignals an Sprungstellen des Wellenwiderstandes der Leitung erzeugt werden, zusammensetzen.

In einem Echoauslöscher 14 wird daher aus dem eigenen Sendesignal und dem eigenen korrigierten Empfangssignal durch ein selbstlernendes System ein Korrektursignal KS gebildet, welches die oben erwähnten Störanteile im Empfangssignal möglichst gut nachbildet. Das Korrektursignal KS wird in einer Subtrahierschaltung 15 vom Ausgangssignal B des Impulsfilters subtrahiert. Durch die Rückführung dieses so korrigierten Empfangssignals an den Echoauslöscher ist es nun möglich, das Empfangssignal nahezu vollständig von den oben erwähnten Störanteilen zu befreien, sodaß das korrigierte Empfangssignal nahezu ausschließlich Anteile aus dem Sendersignal der sendenden Datenstation enthält. Das Ergebnissignal dieser Subtraktion dient einerseits als Eingangssignal für einen Pegeldetektor 22, andererseits wird es über einen Regelverstärker 16 als korrigiertes Empfangssignal KE sowohl dem Rückmeldeeingang des Echoauslöschers 14 einer Taktaussiebeschaltung 23 und einem Vorwärtsentzerrer 17 zugeführt. Im Regelverstärker 16 werden die durch das Korrektursignal KS verursachten Pegeländerungen des Empfangssignals ausgeglichen.

In der Taktaussiebeschaltung 23 wird aus dem korrigierten Empfangssignal ein der Übertragungsrate der Sendersymbole entsprechendes Taktsignal abgeleitet und als Synchronsignal dem Taktgenerator 24 zugeführt. Dieser Taktgenerator erzeugt daraus das Taktsignal für die Analog-Digital- bzw. Digital-Analog-Wandler und durch Frequenzvervielfachung einen Bittakt für den Noise Predictor 25.

Das korrigierte Empfangssignal KE wird über einen Vorwärtsentzerrer 17 geführt, in dem möglichst alle linearen Verzerrungen, die das Signal auf der Leitung zwischen sendender und empfangender Datenstation erfährt, rückgängig gemacht werden. Dies ist bis auf eine nicht rückgängig machbare Verzögerung durch einen zur Übertragungsstrecke komplementären Frequenzgang des Entzerrers weitgehend möglich. Das Ausgangssignal des Vorwärtsentzerrers 17 wird über eine Subtrahierschaltung 19 an den Eingang des Noise Predictors und Discriminators 25 geführt.

In der Subtrahierschaltung werden das Ausgangssignal eines Rückwartsentzerrers 18, welcher sein Eingangssignal vom Noise Predictor und Discriminator erhält, und das Ausgangssignal eines adaptiven Filters 20, welches ihr Eingangssignal ebenfalls vom Noise Predictor und Discriminator erhält, vom Empfangssignal subtrahiert und damit die eigentliche Eingangsgröße für den Noise Predictor und Discriminator gebildet.

Im Noise Predictor und Discriminator 25 wird die Rückwandlung des acht-wertigen Leitungssymbols in ein Binärsignal durchgeführt. Dazu ist der gesamte Wertebereich für das Empfangssignal in acht Teilbereiche etwa +7, +5, +3, +1, -1, -3, -5, -7 unterteilt, wobei jeder Wertebereich von den benachbarten durch einen verbotenen Bereich, etwa +6, +4, +2, 0, -2, -4, -6 getrennt ist (siehe Figur 4).

Liegt nun der Momentanwert des Empfangssignals in einem verbotenen Bereich, so wird einerseits ein Ausgangssignal SQ erzeugt, das angibt, daß die Signalqualität schlecht ist und es wird außerdem über ein Fehlersignal (Error) an das adaptive Filter 20 versucht, das Empfangssignal so zu beeinflussen, daß möglichst selten derartige verbotene Zustände auftreten. Es werden dadurch aufeinanderfolgende Fehler dekorelliert.

Liegt der Momentanwert des Empfangssignals in einem erlaubten Bereich, so wird über den Ausgang SQ gute Signalqualität signalisiert. Weiters wird im Discriminator das Empfangssignal entsprechend den acht Teilbereichen für den Signalwert als eines von acht möglichen Symbolen erkannt, dem Symbol wird entsprechend einer Codiertabelle z.B. wie bereits in Fig. 3 beschrieben, ein Tri-Bit zugeordnet und das Dreibitwort anschließend serialisiert. Dieses serielle binäre Empfangssignal ist an einem weiteren Ausgang des Noise Predictors und Discriminators abgreifbar und wird in einem Entwürfler 21 mit einem zum Verwürfler 3 des Sendeteils komplementären Algorithmus in das binäre Empfangssignal RxD umgewandelt, welches am Empfangsdatenausgang des Empfangsteils anliegt.

Falls der Empfangsteil mit einer Hilfskanaleinrichtung ausgestattet ist, werden die zusätzlich möglichen Signalpegel +9 bzw. -9 erkannt und in einem zum Codierer komplementären Verfahren das Empfangsdatensignal für den Hilfskanal gebildet, welches an einem weiteren Ausgang RxDaux abgreifbar ist.

Ein weiterer Ausgang des Noise Predictors und Discriminators steuert einen Rückwärtsentzerrer 18, welcher durch Verwendung des bereits entschlüsselten Signals weitere Verzerrungen, welche z.B. im Übertragungskanal durch Übersprechen zwischen benachbarten Kanälen auftreten, durch Subtraktion eines Korrektursignals im Subtrahierer 19 zum Teil rückgängig macht. So werden durch Verwendung eines Vorwärtsentzerrers 17 und eines Rückwärtsentzerrers 18 möglichst alle durch die Übertragungseigenschaften des Signalwegs vom Sender zum Empfänger hervorgerufenen Verzerrungen beseitigt. Im Empfangsteil 9 ist weiters eine Auswertelogik 26 vorgesehen, in der ein Signal NB (nicht bereit) erzeugt wird, welches angibt, ob der Übertragungskanal zwischen Sender und Empfänger unterbrochen ist. Es wird dazu das Ausgangssignal des Pegeldetektors 22 ausgewertet. Ist die Amplitude des Empfangssignals zu klein, so ist anzunehmen, daß der Übertragungskanal gestört oder unterbrochen ist.

Bei einer plötzlichen Unterbrechung des Übertragungskanals liegt am Eingang des Empfangsteils im wesentlichen nur mehr das über die Gabelschaltung eingekoppelte eigene Sendersignal und ein an der Unterbrechungsstelle des Übertragungskanals reflektiertes eigenes reflektiertes Signal an. Diese Signale können durch die plötzliche Fehlanpassung der Gabelschaltung durch Störungen im Übertragungskanal wesentlich größer sein als im Normalbetrieb. Der Echoauslöscher braucht aber eine gewisse Zeit, bis das eigene Sendesignal durch Subtraktion des Korrektursignals im Subtrahierer 15 wegkompensiert werden kann. In der Zwischenzeit würde der Pegeldetektor 22 ein ausreichend großes Empfangssignal erkennen und das der Auswertelogik melden. Daher wird der Auswertelogik an weiteren Eingängen zusätzlich das eigene Sendesignal KLS und das decodierte Empfangssignal KLE zugeführt. Durch Korrelation dieser beiden Signale kann in der Auswertelogik festgestellt werden, ob die Empfangsdaten den eigenen Sendedaten entsprechen (= Leitungsunterbrechung) oder gültige Empfangsdaten darstellen.

Das Ergebnis dieses Bewertungsvorganges kann über einen weiteren Eingang der Auswertelogik, an welchem das Signal SQ anliegt, von der Qualität des Empfangssignals abhängig gemacht werden. Das Ausgangssignal NB der Auswertelogik gibt schließlich an, ob der Übertragungskanal als gestört oder als ausreichend gut zu betrachten ist.

## Patentansprüche

1. Zweidrahtmodem zur Übertragung von Signalen im Basisband mit einem Sende- und einem Empfangsteil (2, 9), welche ausgangs- bzw. eingangsseitig über eine Gabelschaltung (8) mit einer Zweidrahtleitung verbunden sind, wobei der Sendeteil (2) und der Empfangsteil (9) zur Korrektur des empfangenen Signals mit einem Echoauslöscher (14) verbunden sind und das korrigierte Signal (KE) einem Vorwärtsentzerrer (17) zugeführt wird, welcher Vorwärtsentzerrer über einen ersten Eingang (+) und den Ausgang einer Subtrahierschaltung (19) mit dem Eingang eines Discriminators (25) zur Umwandlung des kodierten Empfangssignals in ein binäres Empfangssignal verbunden ist, wobei ein Ausgang des Discriminators (25) über einen Rückwärtsentzerrer (18) an einen zweiten Eingang (-) der Subtrahierschaltung (19) rückgeführt ist, **dadurch gekennzeichnet**, daß ein weiterer Ausgang des Discriminators (25) über ein adaptives Filter (Noise Predictor) (20) an einen weiteren Eingang (-) der Subtrahierschaltung (19) rückgeführt ist.

2. Verfahren zur Übertragung von Signalen im Basisband, wobei in einem mit dem Sende- und dem Empfangsteil (2,9) des Modems verbundenen Echoauslöscher (14) durch Auswertung des eigenen Sendesignals und durch Auswertung des eigenen korrigierten Empfangssignals (KE) ein Korrektursignal (KS) erzeugt und vom eigenen Empfangssignal des Empfangsteils (9) subtrahiert wird, darauffolgend das korrigierte Empfangssignal (KE) über einen Vorwärtsentzerrer (17) geführt und entzerrt wird, weiters das Ausgangssignal des Vorwärtsentzerrers (17) über eine Subtrahierschaltung (19) an den Eingang eines Discriminators (25) geführt wird, durch welchen eine Umwandlung des korrigierten Empfangssignals (KE) in ein binäres Signal vorgenommen wird, wobei in der Subtrahierschaltung (19) das Ausgangssignal eines Rückwärtsentzerrers (18), welcher sein Eingangssignal vom Discriminator (25) erhält, vom korrigierten Empfangssignal (KE) subtrahiert wird, **dadurch gekennzeichnet**, daß im Discriminator (25) eine Bewertung der Empfangsqualität des korrigierten Empfangssignals (KE) vorgenommen und ein entsprechendes Fehlersignal (Error) gebildet wird, welches dem Eingang eines adaptiven Filters (Noise Predictors) (20) zugeführt wird, und daß das Ausgangssignal des adaptiven Filters (Noise Predictors) (20) zusätzlich vom korrigierten Empfangssignal (KE) subtrahiert und damit die eigentliche Eingangsgröße für den Discriminator (25) gebildet wird.

3. Verfahren nach Anspruch 2, **dadurch gekennzeichnet**, daß im Discriminator (25) ein Signal-Qualitätssignal erzeugt wird, wobei das korrigierte und entzerrte Empfangssignal mit voreingestellten Signalqualitätspegeln, welche jeweils zwischen den Nennpegeln des Signals liegen, verglichen und dadurch ein Signal (SQ) erzeugt wird, welches angibt, ob das Empfangssignal eine bestimmte Mindestqualität aufweist.

4. Verfahren nach Anspruch 2 oder 3, **dadurch gekennzeichnet**, daß im Empfangsteil (9) in einer Auswertelogik (26) der Signalpegel des decodierten Empfangssignals (KLE) und des eigenen Sendesignals (KLS) unter Erzeugung eines Ausgangssignals (NB) verknüpft werden, welches Ausgangssignal (NB) angibt, ob der Datenübertragungskanal zwischen sendender und empfangender Datenstation bereit oder unterbrochen ist.

5. Verfahren nach einem der Ansprüche 2 bis 4, **dadurch gekennzeichnet**, daß zusätzlich zu den Daten des Hauptkanals, Daten eines Hilfskanals mit reduzierter Datenrate übertragen werden, indem zusätzlich zu bestimmten, für den Hauptkanal festgelegten Signalpegeln, weitere Signalpegel vereinbart und - abhängig von den Daten des Hilfskanals - an Stelle der Pegel des Hauptkanals gesendet werden.
